Europäisches Patentamt

European Patent Office

Office européen des brevets

(11) Veröffentlichungsnummer: **0 189 822**
**A2**

# (12) EUROPÄISCHE PATENTANMELDUNG

(21) Anmeldenummer: 86100732.6

(22) Anmeldetag: 21.01.86

(51) Int. Cl.⁴: **H 04 B 7/26**
**H 04 Q 7/02**

(30) Priorität: 30.01.85 DE 3502942

(43) Veröffentlichungstag der Anmeldung:
06.08.86 Patentblatt 86/32

(84) Benannte Vertragsstaaten:
DE FR GB IT NL SE

(71) Anmelder: ANT Nachrichtentechnik GmbH
Gerberstrasse 33
D-7150 Backnang(DE)

(72) Erfinder: Sperlich, Josef, Dipl.-Ing.
Kelterweg 52
D-7150 Backnang(DE)

(74) Vertreter: Schickle, Gerhard, Dipl.-Ing.
ANT Nachrichtentechnik GmbH Patent- und
Lizenzabteilung Gerberstrasse 33
D-7150 Backnang(DE)

(54) Digitales Mobilfunksystem.

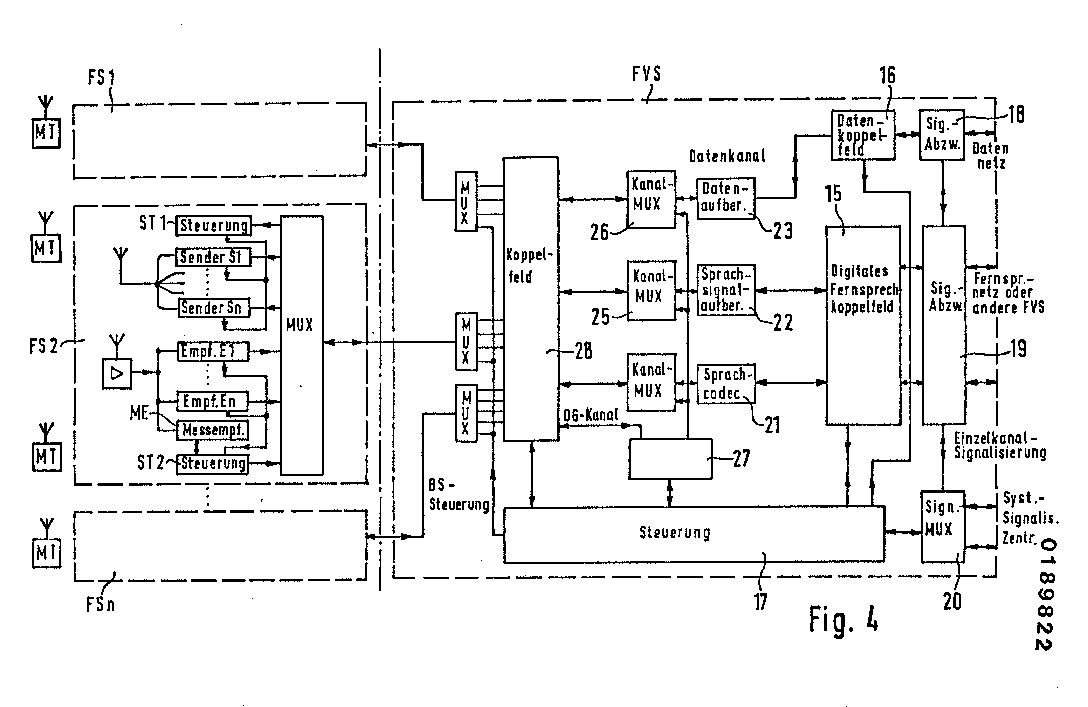

(57) Ein sehr flexibel an die jeweils gegebenen Funkverkehrs-verhältnisse anpaßbares digitales Mobilfunksystem, bestehend aus Funkvermittlungsstellen (FVS) und Feststationen (FST1 ... Fsn) welche von den Funkvermittlungsstellen (FVS) kommende Signalkanäle an mobile Teilnehmer (MT) aussenden und von den mobilen Teilnehmern (MT) abgegebene Signalkanäle empfangen und sie an die Funkvermittlungsstellen (FVS) weiterleiten, ist dadurch gekennzeichnet, daß in jeder Funkvermittlungsstelle (FVS) ein Koppelfeld (28) vorhanden ist, welches jeweils mehrere Signalkanäle und ein Rahmensynchronwort (RSyn) in einen Zeitmultiplex-Rahmen einfügt und die in Rahmen zusammengefaßten Signalkanäle an die der Funkvermittlungsstelle (FVS) zugeordneten Feststationen (FS1 ... Fsn) weiterleitet, und daß das Koppelfeld (28) die von den Feststationen (FS1 ... FSn) empfangenen Signalkanäle auf ihnen zugeordnete, signalverarbeitende Einrichtungen (24 ... 27) in der Funkvermittlungsstelle (FVS) aufteilt (Fig. 4).

./...

EP 0 189 822 A2

Fig. 4

## Digitales Mobilfunksystem

Die vorliegende Erfindung betrifft ein digitales Mobilfunksystem, bestehend aus Funkvermittlungsstellen und Feststationen, welche von den Funkvermittlungsstellen kommende Signalkanäle an mobile Teilnehmer aussenden und von den mobilen Teilnehmern abgegebene Signalkanäle empfangen und sie an die Funkvermittlungsstellen weiterleiten.

Ein derartiges digitales Mobilfunksystem wurde in der deutschen Patentanmeldung P 34 26 561.9 vorgeschlagen.

Ein Mobilfunksystem ermöglicht es, daß mobile Teilnehmer untereinander oder mit am öffentlichen Fernsprechnetz oder an einem Datennetz angeschlossenen Teilnehmern Informationen austauschen können. Das zu versorgende Funkgebiet, in dem sich die mobilen Teilnehmer aufhalten, ist dabei in Funkzellen eingeteilt. In jeder Funkzelle befindet sich eine Feststation, die die Funkverbindung mit den mobilen Teilnehmern herstellt. Die Zellengröße wird unter Berücksichtigung der Zahl der zur Verfügung stehenden Funkkanäle der mobilen Teilnehmerzahl angepaßt, so daß sich für eine größere Dichte der mobilen Teilnehmer kleinere Zellen bei entprechend reduzierter Sendeleistung ergeben. Mehrere solcher Zellen mit ihren Feststationen sind jeweils einer Funkvermittlungsstelle zugeordnet.

Die Funkvermittlungsstellen besitzen neben den Schnittstellen zu den Feststationen weitere Schnittstellen zum öffentlichen Fernsprechnetz und in der Regel auch zu einem Datennetz. Besagte Funkvermittlungsstellen wickeln Prozeduren ab beim Anmelden, Registrieren, Suchen, Weiterreichen von Signalkanälen, Aktualisieren der Standorte der mobilen Teilnehmer sowie Auf- und Abbau von Sprach- und Datenübertragungen. Die Funkvermittlungsstellen haben bezogen auf die

BK 85/4

**0189822**

mobilen Teilnehmer folgende Funktionen:

Jeder mobile Teilnehmer ist einer Heimat-Funkvermittlungsstelle zugeordnet, in der er mit seiner Adresse registriert ist. Der Aufenthaltsort des mobilen Teilnehmers wird ständig in seiner Heimat-Funkvermittlungsstelle aktualisiert, so daß die Funkvermittlungsstelle, in deren Bereich sich der mobile Teilnehmer gerade aufhält, in der Heimat-Funkvermittlungsstelle stets bekannt ist.

Während der mobile Teilnehmer sich im Bereich einer Funkvermittlungsstelle, über die augenblicklich der Gesprächs- und Datenaustausch abläuft, aufhält werden auch Informationen über die Empfangsqualitäten benachbarter Funkvermittlungsstellen ausgetauscht zur Vorbereitung für einen Wechsel des mobilen Teilnehmers in den Funkverkehrsbereich einer anderen Funkvermittlungsstelle.

Die erste Funkvermittlungsstelle, mit der der mobile Teilnehmer zu Anfang des Funkverkehrs Verbindung aufgenommen hat, führt während der ganzen Zeit des Funkverkehrs übergeordnet Regie.

Alle Funkvermittlungsstellen sind über das Datennetz oder das Fernsprechnetz miteinander verbunden und tauschen darüber Daten aus, welche der Organisation und Verwaltung des gesamten Mobilfunknetzes dienen.

Der Erfindung liegt nun die Aufgabe zugrunde ein digitales Mobilfunksystem der genannten Art anzugeben, das mit möglichst geringem Aufwand realisierbar und sehr flexibel an sich ändernde Funkverkehrsverhältnisse anpaßbar ist.

Erfindungsgemäß wird diese Aufgabe dadurch gelöst, daß in jeder Funkvermittlungsstelle ein Koppelfeld vorhanden ist, welches jeweils mehrere Signalkanäle und ein Rahmensynchronwort in einen Zeitmultiplex-Rahmen einfügt und die in Rahmen zusammengefaßten Signalkanäle an die der Funkvermittlungsstelle zugeordneten Feststationen weiterleitet, und daß das Koppelfeld die von den Feststationen empfangenen Signalkanäle auf ihnen zugeordnete, signalverarbeitende Einrichtungen in der Funkvermittlungsstelle aufteilt.

Zweckmäßige Ausführungen der Erfindung gehen aus den Unteransprüchen hervor.

Der erfindungsgemäße Einsatz des Koppelfeldes in der Funkvermittlungsstelle ermöglicht eine sehr flexible an die jeweiligen Funkverkehrsbedürfnisse angepaßte Zuordnung der Signalkanäle zwischen der Funkvermittlungsstelle und den Feststationen. Außerdem bringt die Erfindung den Vorteil mit sich, daß der größte Teil der Einrichtungen für die Herstellung und Organisation der Daten- und Sprechverbindungen in den Funkvermittlungsstellen konzentriert werden kann und nicht all die vielen Feststationen mit solchen Einrichtungen ausgestattet werden müssen. Die Feststationen sind also mit geringerem Schaltungsaufwand realisierbar und können daher einfacher an wachsende Teilnehmerzahlen angepaßt werden.

Anhand von in der Zeichnung dargestellten Ausführungsbeispielen wird nun die Erfindung näher erläutert. Es zeigen:

Fig. 1 einen Signalrahmenaufbau,
Fig. 2 den Aufbau von Organisationskanälen,
Fig. 3 das Funktionsschema eines mobilen Teilnehmers,
Fig. 4 das Funktionsschema einer Funkvermittlungsstelle und
Fig. 5 das Funktionsschema eines Koppelfeldes.

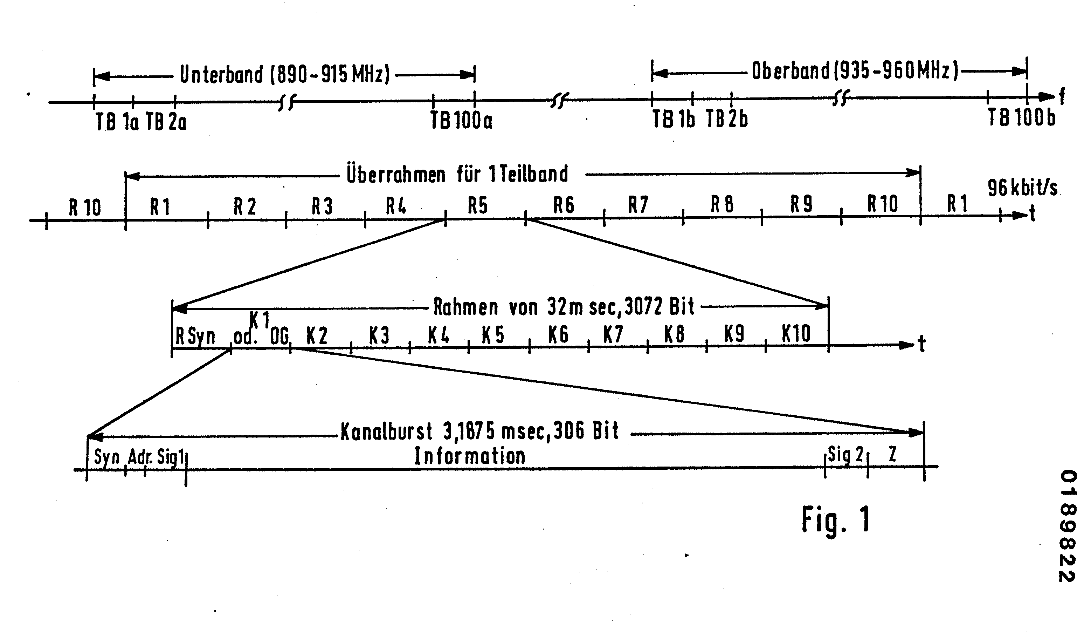

Wie die Fig. 1 verdeutlicht, sind bei dem hier betrachteten Ausführungsbeispiel eines Mobilfunksystems zwei Frequenzbänder für die Signalübertragung vorgesehen. Ein 25 MHz breites

0189822

Unterband (890 MHz - 915 MHz) ist für die Signalübertragung von den mobilen Teilnehmern zu den Feststationen und ein ebenfalls 25 MHz breites Oberband (935 MHz - 960 MHz) für die Signalübertragung von den Funkvermittlungsstellen bzw. deren zugeordneten Feststationen zu den mobilen Teilnehmern vorgesehen. Dabei ist hier das Unter- und das Oberband in jeweils 100 Teilfrequenzbänder TB1a ... TB100a, TB1b ... TB100b unterteilt.

Je ein Teilfrequenzband gleicher Ordnungszahl im Unter- und Oberband wird von einem Zeitmultiplexsystem mit Vielfachzugriff, von einem sogenannten TDMA-System, belegt.

Ein nach dem Prinzip des Zeitmultiplex mit Vielfachzugriff aufgebauter Rahmen (TDMA-Rahmen) R1 ... R10 enthält bei dem vorliegenden Ausführungsbeispiel 10 blockweise aneinandergereihte Signalkanäle K1 ... K10. Die Rahmendauer beträgt dabei 32 ms. Am Anfang des Rahmens steht ein Rahmensynchronwort RSyn, das auch die Rahmennummer enthält und von den Feststationen an die mobilen Teilnehmer mit übertragen wird. Aus z.B. 10 solchen Rahmen R1 ... R10 läßt sich ein Überrahmen bilden, wie die Fig. 1 zeigt. So braucht ein mobiler Teilnehmer beispielsweise einen Anruf von derjenigen Feststation, bei der er sich gerade angemeldet hat, nur in einem Rahmen zu erwarten, der mit der Nummer seiner Teilnehmer-Endziffer übereinstimmt, und kann - solange keine Verbindung aufgebaut ist - in der anderen Zeit, nämlich während die anderen neun Rahmen übertragen werden, die Empfangsqualität von anderen Feststationen ermitteln und sich gegebenenfalls ummelden (Roaming).

Neben den Nutzsignalkanälen K1 ... K10, also denen mit der eigentlichen Sprach- oder Dateninformation, gibt es noch einen Organisationskanal OG, der nur an Stelle z.B. des ersten Kanals K1 eines Rahmens in einigen wenigen Teilfrequenzbändern übertragen wird. In allen anderen Teilbändern ist jeweils der erste Kanal der Rahmen mit Nutzinformation belegt.

Während von den Feststationen alle Signalkanäle in kontinuierlicher Folge wiederkehrend zu den mobilen Teilnehmern ausgesendet werden, dürfen in der Gegenrichtung die mobilen Teilnehmer nur in den ihnen zugeteilten Kanalzeiten burstweise senden. Der Burst eines Nutzinformation enthaltenden Kanals ist, wie der Fig. 1 zu entnehmen ist, folgendermaßen aufgebaut: Der Kanalburst beginnt mit einem Synchronwort Syn, dem sich ein Adresswort Adr anschließt. Darauf folgt ein erster Teil einer sprach- oder datenbegleitenden Signalisie- rung Sig1. Diese Signalisierung, auch Inbandsignalisierung genannt, enthält z.B. Informationen über Gebühreneinheiten, über Sendeleistungseinstellungen, über Zuweisungen zu neuen Teilfrequenzbändern, über Umschaltungen von Sprache auf Daten, Quittierungen etc.. Die überwiegende Anzahl der Bits im Kanalburst wird von der eigentlich zu übertragenden Sprach- oder Dateninformation belegt. Der Sprach- oder Dateninformation schließt sich der zweite Teil der Signalisierung Sig2 an. Am Burstende ist ein Bitblock Z vorgesehen, der in der Übertragungsrichtung von den Feststationen zu den mobilen Teilnehmern Systeminformation enthalten kann und in der Übertragungsrichtung von den mobilen Teilnehmern zu den Feststationen für den Ausgleich der verschiedenen Laufzeiten der ausgesendeten Signalkanäle vorgesehen ist.

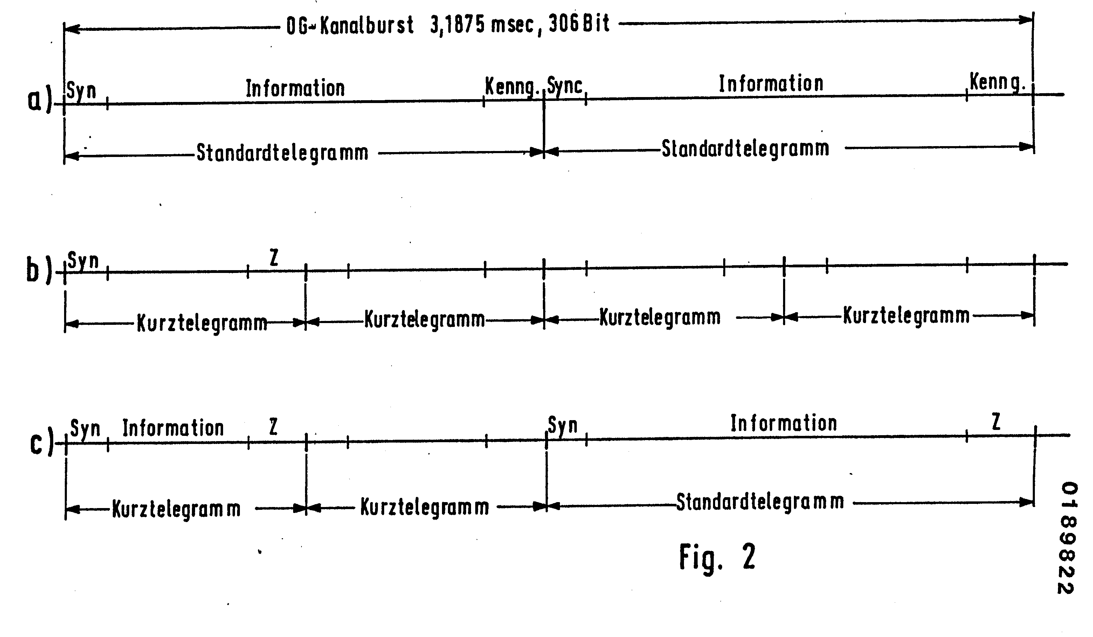

Die Struktur eines Organisationskanalbursts zeigt die Fig. 2. Dabei geht aus dem Diagramm a) der Aufbau eines Organisationskanalbursts, der von den Feststationen zu den mobilen Teilnehmern übertragen wird, hervor. Dieser Organisationskanalburst ist in zwei gleich lange Teilbursts aufgeteilt, die zwei voneinander unabhängige Standardtelegramme enthalten. Jedes Standardtelegramm beginnt mit einem Synchronwort Syn, dem ein Informationsteil und eine Kennung der sendenden Feststation folgen. Im Informationsteil können Anweisungen einer Feststation an einen mobilen Teilnehmer, ein Ruf oder

BK 85/4

eine Quittung über ein empfangenes Telegramm, enthalten sein.

Das Diagramm b) gibt den Aufbau eines Organisationskanalbursts wieder, der in TDMA-Rahmen ungerader Ordnungszahl übertragen wird. Dieser Organisationskanalburst ist in 4 Teilblöcke für Kurztelegramme unterteilt, die mit einem Synchronwort Syn beginnen, einen Informationsteil für die gekürzte Teilnehmernummer des sich meldenden mobilen Teilnehmers und am Ende einen Bitblock Z für den Laufzeitausgleich enthalten.

Die Struktur eines in Rahmen gerader Ordnungszahl eingefügter Organisationskanalbursts ist dem Diagramm C) in Fig. 2 zu entnehmen. Hier ist der Organisationskanalburst in zwei Teilblöcke für Kurztelegramme und einen Teilblock für ein Standardtelegramm unterteilt. Der Teilblock für das Standardtelegramm darf nur auf Anweisung der Funkvermittlungsstellen von einem mobilen Teilnehmer belegt werden und dient der Übermittlung der vom mobilen Teilnehmer abzusetzenden Information, z.B. der Wählziffern für eine gewünschte Verbindung, der Einbuchung in eine neue Feststation bzw. Funkvermittlungsstelle, von Quittungen u.ä..

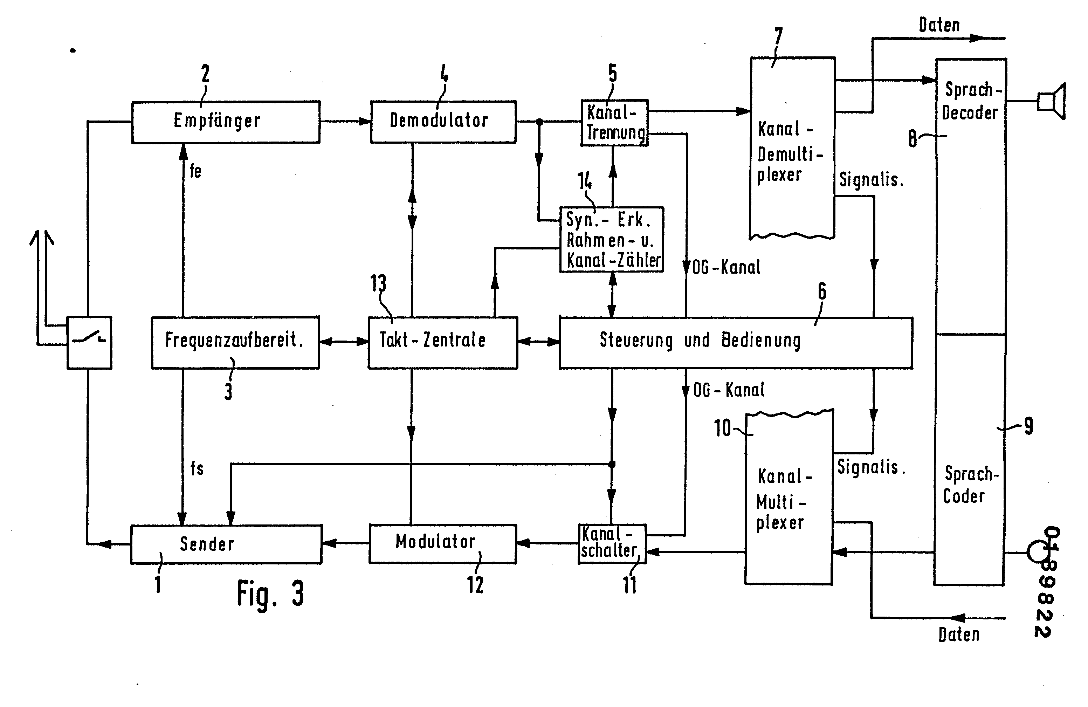

Die Fig. 3 zeigt eine Ausführung der Sende-Empfangsanordnung eines mobilen Teilnehmers. Der Sender 1 und der Empfänger 2 können von einer Frequenzaufbereitungseinrichtung 3 auf die Sendefrequenz $f_s$ und die Empfangsfrequenz $f_e$ jedes von den Feststationen angewiesenen Teilfrequenzbandes im Oberband und im Unterband eingestellt werden. Empfangen und in einem Demodulator 4 demoduliert werden kontinuierlich zunächst alle Kanäle des Rahmens im angewiesenen Teilfrequenzband. Eine Einrichtung 5 trennt von allen übertragenen Kanälen denjenigen von der Funkvermittlungsstelle dem mobilen Teilnehmer zugewiesenen Kanal ab und leitet diesen, falls es ein Organisationskanal ist, an eine Steuerungs- und Bedieneinheit 6 und, falls es ein Nutzsignalkanal ist, an einen Kanaldemultiplexer 7 weiter. Der Kanaldemultiplexer 7 führt Sprachsignale einem Sprachdekodierer 8 zu, gibt Datensignale
auf einen Datenausgang und leitet Signalisierungsinformation
an die Steuerungs- und Bedieneinheit 6 weiter.

In Senderichtung werden die von einem Sprachkodierer 9 kommenden Sprachsignale oder die an einem Dateneingang anliegenden Datensignale und von der Steuerungs- und Bedieneinheit
gelieferte Signalisierungsinformation in einem Kanalmultiplexer 10 zu einem Kanalburst zusammengefaßt. Ein Kanalschalter 11 schaltet entweder diesen die Nutzinformation enthaltenden Kanal oder ein Kurz- oder Standardtelegramm, das von
der Steuerungs- und Bedieneinheit 6 bereitgestellt wird im
Organisationskanal auf einen Modulator 12, der sein Ausgangssignal an den Sender 1 weitergibt.

Die Sende-Empfangsanordnung des mobilen Teilnehmers enthält
noch eine Takt-Zentrale 13 und eine Einrichtung 14, welche
die Synchronworte zu Beginn der Kanalburst erkennt und die
Kanäle und Rahmen zählt.

Die Fig. 4 zeigt eine Funkvermittlungsstelle FVS mit mehreren daran angeschlossenen Feststationen FS1, FS2 ... FSn.
Die Feststationen FS1, FS2 ... FSn besitzen mehrere Sender
S1 .. Sn und Empfänger E1 ... En, deren Zahl dem Verkehrsaufkommen angepaßt ist. Jedem Sender ist ein Teilfrequenzband im Oberband (935 MHz - 960 MHz) und jedem Empfänger ein
Teilfrequenzband im Unterband (890 MHz - 915 MHz) zugeordnet. Die Sender S1 ... Sn strahlen in ihren Teilfrequenzbändern kontinuierlich die in TDMA-Rahmen aneinandergereihten
Kanäle ab. Die Empfänger E1 ... En empfangen burstweise die
Signalkanäle von den in ihren Teilfrequenzbändern sendenden
mobilen Teilnehmern MT, führen einen Laufzeitausgleich zwischen den Signalkanälen durch und fügen sie in Empfangsrahmen ein, welche auf das Senderahmenraster normiert sind.

Zur Bestimmung an welche Funkzelle und deren zugehörige Feststation ein mobiler Teilnehmer während einer Signalübertragung weitergereicht werden soll, ist in jeder Feststation ein Meßempfänger ME vorhanden. Dieser Meßempfänger ME kann auf alle Teilfrequenzbänder des Unterbandes eingestellt werden, um die Übertragungsqualität von Signalkanälen der mobilen Teilnehmer, die mit Nachbarfeststationen kommunizieren, zu ermitteln. An Hand dieser Meßwerte kann dann die Entscheidung getroffen werden, auf welche Feststation der mobile Teilnehmer umgeschaltet werden soll.

In den Feststationen vorhandene Steuerungen ST1 und ST2 übernehmen die Betriebs- und Pegelsteuerung der Sender und Empfänger, die Auswertung der Signallaufzeiten und Übertragungsqualitätskriterien, sowie die Frequenzeinstellung und die Auswertung der Meßergebnisse des Meßempfängers.

Die Funkvermittlungsstelle FVS ist mit einem an das öffentliche Fernsprechnetz angeschlossenen digitalen Fernsprechkoppelfeld 15 und einem an ein Datennetz angeschlossenen Datenkoppelfeld 16 ausgestattet. Nutzkanalbegleitende Signalisierungskanäle sowie zentrale Signalisierungskanäle für die Herstellung der Fernsprech- und Datenverbindungen als auch Systemsignalisierungskanäle für das Management des Mobilfunknetzes werden einer Steuerung 17 über Signalabzweiger 18, 19 und einen Signalisierungskanalmultiplexer 20 zugeführt. Die genannte Steuerung 20 legt die durchzuschaltenden Wege fest und ermöglicht folgende Verbindungskombinationen:

a) Über das digitale Fernsprechkoppelfeld 15

- von einem Sprachkodierer, -dekodierer zum Fernsprechnetz und dessen Teilnehmern, gegebenenfalls über eine andere Funkvermittlungsstelle,
- von einer Einrichtung 22 zur Sprachsignalaufbereitung, die z.B. das Sprachsignal in eine andere Bitrate umsetzt oder eine Signal-Paketierung vornimmt, zu einer ähnlichen Einrichtung einer anderen Funkvermittlungsstelle über das Fernsprechnetz oder direkt zu dieser Funkvermittlungsstelle.

b) Über das Datenkoppelfeld

- von einer Einrichtung 23 zur Datensignalaufbereitung, die z.B. das Datensignal in eine andere Bitrate umsetzt oder eine Paketierung der Daten vornimmt, direkt zum leitungs- oder paketvermittelnden Datennetz und dessen Teilnehmer oder über eine andere Funkvermittlungsstelle zum Datennetz.

Der Sprachkodierer, -dekodierer 21 und die Einrichtungen 22 und 23 zur Sprachsignalaufbereitung und Datenaufbereitung sind jeweils mit einem Kanalmultiplexer 24, 25, 26 verbunden. Die Kanalmultiplexer 24, 25 und 26 erhalten auf Abruf die Sprach- bzw. Dateninformation burstweise und fügen entsprechend dem in Fig. 1 dargestellten Diagramm dieser eigentlichen Nutzinformation das Kanal-Synchronwort, die Kanaladresse und die Signalisierung zu. Das Kanal-Synchronwort, die Kanaladresse und die Signalisierung stellt die Steuerung bereit und ein Verteiler 27 leitet diese Zusatzinformationen an die entsprechenden Kanalmultiplexer 24, 25 und 26 weiter.

Ein Koppelfeld 28 übernimmt auf Abruf die Kanalburst der Kanalmultiplexer 21, 22, 23 und fügt sie zeitlich gestaffelt zusammen mit einem Rahmensynchronwort gemäß dem in Fig. 1 gezeigten Schema in einen TDMA-Rahmen ein. Dieser kann als einzelner Rahmen einem Sender in einer Feststation oder es können mehrere solcher Rahmen über ein System von Multiplexern MUX den Sendern der Feststationen zugeführt werden.

In Gegenrichtung erhält das Koppelfeld 28 die von den mobilen Teilnehmern ausgesendeten und von den Empfängern der Feststationen empfangenen Kanalbursts direkt oder auch über ein System von Multiplexern und verteilt sie auf die entsprechenden Kanalmultiplexer 24, 25 und 26. Die Steuerung 17 legt fest, auf welchen Kanalmultiplexer und in welchem Zeitschlitz die einzelnen Kanalbursts durchgeschaltet werden sollen. Ebenso liefert die Steuerung 17 die für die mobilen Teilnehmer bestimmten Organisationskanäle (vgl. Fig. 2) OG an das Koppelfeld 28 und nimmt über den Verteiler 27 die im Koppelfeld eingegangenen Organisationskanäle auf.

Wenn kein Sprach- oder Datensignal für einen Kanal im TDMA-Rahmen vorliegt, belegt das Koppelfeld 28 diesen Kanal mit einem Kanal-Synchronwort und mit anschließender statistischer Information.

Die auf Abruf burstweise vom Sprachkodierer 21, der Einrichtung 22 zur Sprachsignalaufbereitung oder Einrichtung 23 zur Datenaufbereitung an einen Kanalmultiplexer und von diesem unmittelbar weiter an das Koppelfeld 28 übergebene Information wird ohne Zeitverzug im TDMA-Rahmen weitergereicht und auch unmittelbar gesendet. Durch das zeitgerechte Bereitstellen der Kanalbursts durch die Kanalmultiplexer 24, 25, 26 und das sofortige Weiterreichen über das Koppelfeld 28 zum Sender entsteht keine und bei Verwendung des zwischen der Funkvermittlungsstelle FVS und den Feststationen FS1 ... FSn eingesetzten Systems von Multiplexern MUX nur eine geringe Signallaufzeitverzögerung.

Das genannte und im folgenden noch näher beschriebene Koppelfeld 28 ist in der Lage, Kanalbursts auf beliebige Sender in beliebigen an die Funkvermittlungsstelle angeschlossenen Feststationen durchzuschalten. Das Weiterreichen (Hand off) eines mobilen Teilnehmers von einer Funkzelle zur nächsten übernimmt also das Koppelfeld 28 auf entsprechende Anweisung der Steuerung 17.

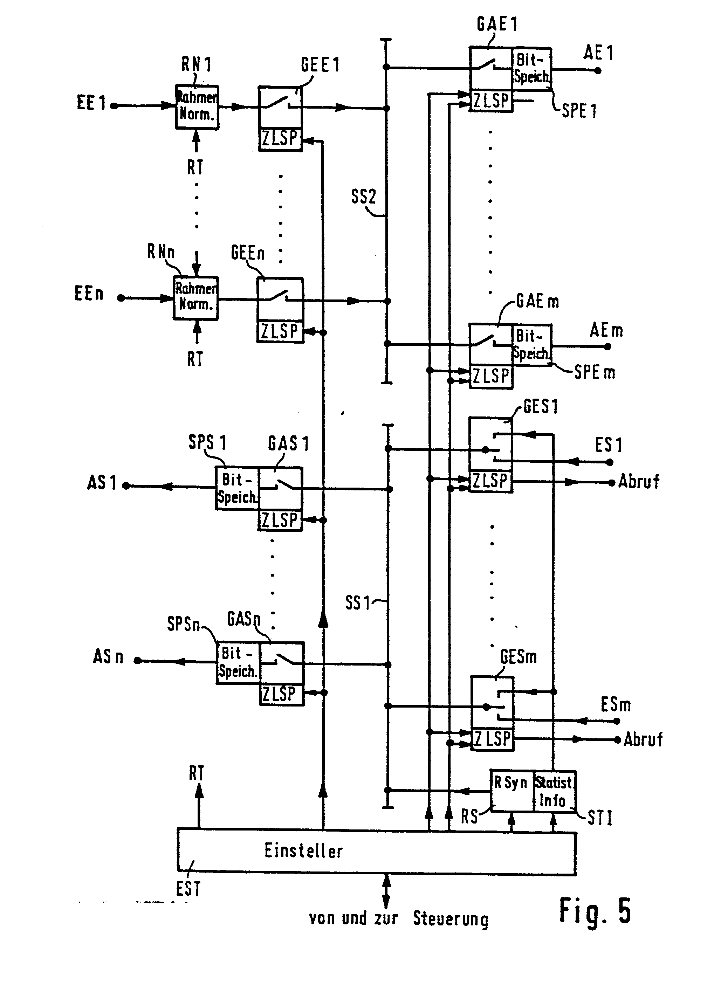

Das in Fig. 5 dargestellte Koppelfeld besitzt zwei Sammelschienen SS1 und SS2. An die erste Sammelschiene SS1 sind in den Feststationen die in TDMA-Rahmen zusammengefaßten Kanalbursts liefernde Ausgänge AS1 ... ASn über Gatter GAS1 ...
GASn angeschlossen, wobei n der Zahl der vorhandenen Sendefrequenzteilbänder entspricht. Ebenfalls an diese erste Sammelschiene SS1 sind Eingänge ES1 ... ESm zur Übernahme der
von der Funkvermittlungsstelle bereitgestellten Signalkanäle über Gatter GES1 ... GESm angeschlossen, wobei für jeden
Signalkanal in jedem Sendefrequenzteilband ein eigener Eingang vorhanden ist.

An die zweite Sammelschiene SS2 sind n Eingänge ES1 ... ESn
zur Übernahme der von den Feststationen empfangenen Signalkanäle über Gatter GEE1 ... GEEn angeschlossen, wobei n der
Zahl der vorhandenen Empfangsfrequenzteilbänder entspricht.
Außerdem sind an die zweite Sammelschiene SS2 Ausgänge AE1
... AEm zur Übergabe der von den Feststationen kommenden
Signalkanäle an die signalverarbeitenden Einrichtungen der
Funkvermittlungsstelle über Gatter GAE1 ... GAEm angeschlossen, wobei für jeden Signalkanal in jedem Empfangsfrequenzteilband ein eigener Ausgang vorhanden ist.

Jedes der an die Sammelschienen SS1 und SS2 angeschlossenen
Gatter ist mit einem Zeitlagenspeicher ZLSP verbunden. Die
in den Zeitlagenspeichern eingeschriebenen Zeitlagen bestimmen, zu welchen Zeitpunkten und wie lange die Gatter die zugehörigen Ein- bzw. Ausgänge an die Sammelschienen durchschalten. Jedem feststationsseitigen Eingang EE1 ... EEn
und Ausgang AS1 ... ASn ist eine Zeitlage fest zugeordnet.
Diese Zeitlagen unterteilen den TDMA-Rahmentakt in n Vermittlungstakte.

Während der zugeordneten Zeitlagen verbindet jeweils das
Gatter GAS1 ... GASn die erste Sammelschiene SS1 mit einem
Bitspeicher SPS1 ... SPSn, so daß das zu dem mit der Zeitlage übereinstimmenden Zeitpunkt auf der Sammelschiene anstehende Bit in den Bitspeicher übernommen werden kann, wo
es bis zum Ende des Rahmentaktes gespeichert und dann ausgesendet wird.

Die an den feststationsseitigen Eingängen EE1 ... EEn anliegenden, von den Feststationen kommenden TDMA-Rahmen werden
mittels an die Eingänge geschaltete Einrichtungen RN1 ... RNn
zeitlich auf einen Durchschaltrahmen normiert, d.h. es wird
darin die unterschiedliche Laufzeit zwischen den Rahmen ausgeglichen. Von einem Einsteller EST, der mit der Steuerung
der Vermittlungsstelle in Verbindung steht, erhalten die
Einrichtungen RN1 ... RNn zur Rahmennormierung den Takt RT,
der den Beginn des Rahmens für die Durchschaltung auf die
Sammelschiene SS2 festlegt. Die Gatter GEE1 ... GEEn verbinden zum Zeitpunkt der ihnen zugeordneten Zeitlage die Ausgänge der Normierungseinrichtungen RN1 ... RNn mit der Sammelschiene SS2.

Den Zeitlagenspeichern ZLSP an den mit den Kanalmultiplexern
24, 25, 26 und dem Organisationskanalverteiler 27 der Funkvermittlungsstelle verbundenen Eingängen können neben den
Durchschaltezeitlagen zusätzlich noch die Kanalzeiten frei
zugeordnet werden, d.h. die Gatter schalten die Eingänge
ES1 .. Em bzw. Ausgänge AE1 ... AEm nur während der adressierten Kanalzeit in der ebenfalls adressierten Durchschaltezeitlage.

Bitspeicher SPE1 ... SPEm an den Ausgängen AE1 ... AEm der
zweiten Sammelschiene SS2 speichern jedes einzelne Bit der
empfangenen Information bis zum Ende des Bittaktes und geben es dann aus.

Die Zeitlagenspeicher ZLSP der mit den Eingängen ES1 ... ESm
der ersten Sammelschiene SS1 verbundenen Gatter GES1 ... GESm
geben während der adressierten Kanalzeit Abrufsignale an die
Kanalmultiplexer 24, 25, 26 und den Organisationskanalverteiler 27 ab, die dann die der jeweiligen Kanalzeit zugeordneten Kanalbursts an die abrufenden Eingänge weitergeben.

BK 85/4
0189822

Ein Abrufsignal besteht aus einer Pulsfolge, die soviele Impulse enthält wie innerhalb einer Zeitlage an Signalbits von einem Kanalmultiplexer 24, 25, 26 oder dem Organisationskanalverteiler 27 abzugeben sind.

Die nach Abruf an den Eingängen ES1 ... ESm bereitstehenden Kanalbursts werden von den Gattern GES1 ... GESm an die erste Sammelschiene SS1 durchgeschaltet. Diese Gatter GES1 ... GESm können ebenfalls zu frei adressierbaren Kanalzeiten statistische Information und Kanalsynchronworte, die ein Generator STI bereitstellt, an die erste Sammelschiene SS1 durchschalten. Dadurch kann jeder Kanal im auszusendenden TDMA-Rahmen, falls keine Sprach- oder Dateninformation vorliegt, mit einem Kanalsynchronwort und statistischer Information belegt werden, wodurch den Empfängern der mobilen Teilnehmer die Taktrückgewinnung und Empfängerüberwachung erleichtert wird.

Das Rahmensynchron- und Rahmenzählwort wird von einem Rahmensynchrongenerator RS zeitgerecht auf die erste Sammelschiene SS1 geschaltet.
Die Durchschaltezeitlagen werden vom Einsteller EST mittels eines Binärzählers aus dem Rahmentakt RT abgeleitet und allen Zeitlagenspeichern zugeführt. Außerdem liefert der Einsteller EST den Kanaltakt für die Zeitlagenspeicher an den mit den Kanalmultiplexern und dem Organisationskanalverteiler verbundenen Ein- und Ausgänge. Diese Zeitlagenspeicher erhalten die Kanal- und Zeitlagenadressen ebenfalls vom Einsteller, und diese Adressen bleiben in den Zeitlagenspeichern für die Dauer der Druchschaltung gespeichert.

- - - - -

- 14-

ANT Nachrichtentechnik GmbH
Gerberstraße 33
D-7150 Backnang

E7/Th/kön
BK 85/4

Patentansprüche

1. Digitales Mobilfunksystem, bestehend aus Funkvermittlungsstellen und Feststationen, welche von den Funkvermittlungsstellen kommende Signalkanäle an mobile Teilnehmer aussenden und von den mobilen Teilnehmern abgegebene Signalkanäle empfangen und sie an die Funkvermittlungsstellen weiterleiten, dadurch gekennzeichnet, daß in jeder Funkvermittlungsstelle (FVS) ein Koppelfeld (28) vorhanden ist, welches jeweils mehrere Signalkanäle und ein Rahmensynchronwort (RSyn) in einen Zeitmultiplex-Rahmen einfügt und die in Rahmen zusammengefaßten Signalkanäle an die der Funkvermittlungsstelle (FVS) zugeordneten Feststationen (FS1 ... FSn) weiterleitet, und daß das Koppelfeld (28) die von den Feststationen (FS1 ... FSn) empfangenen Signalkanäle auf ihnen zugeordnete, signalverarbeitende Einrichtungen (24 ... 27) in der Funkvermittlungsstelle (FVS) aufteilt.

2. Digitales Mobilfunksystem nach Anspruch 1, dadurch gekennzeichnet, daß die Feststationen (FS1 ... FSn) mehrere auf verschiedene Teilfrequenzbänder abgestimmte Sender
(S1 ... Sn) und Empfänger (E1 ... En) besitzen und daß
das Koppelfeld (28) die aus den Signalkanälen gebildeten
Rahmen an diejenigen Sender weiterleitet, deren Sendefrequenzen die günstigste Signalübertragung für die jeweilige Verkehrssituation gewährleisten.

3. Digitales Mobilfunksystem nach Anspruch 1, dadurch gekennzeichnet, daß das Koppelfeld (28) jeden nicht mit
einem Nutzsignal belegten Kanal in einem Rahmen mit statistischer Information auffüllt.

4. Digitales Mobilfunksystem nach einem der vorhergehenden
Ansprüche, dadurch gekennzeichnet, daß das Koppelfeld (28)
eine erste Sammelschiene (SS1) besitzt, an die soviele
den Feststationen die Zeitmultiplex-Rahmen liefernde
Ausgänge (AS1 ... ASn) über Gatter (GA1 ... GASn) angeschlossen sind wie Sendefrequenzteilbänder vorhanden
sind, daß das Koppelfeld (28) eine zweite Sammelschiene
(SS2) besitzt, an die soviele von den Feststationen die
Signalkanäle übernehmende Eingänge (EE1 ... EEn) über Gatter (GEE1 ... GEEn) angeschlossen sind wie Empfangsfrequenzteilbänder vorhanden sind, daß an die erste Sammelschiene (SS1) über Gatter (GES1 ... GESm) Eingänge zur
Übernahme der von der Funkvermittlungsstelle (FVS) bereitgestellten Signalkanäle angeschlossen sind, wobei jedem
Signalkanal in jedem Sendefrequenzteilband ein Eingang zugeordnet werden kann, daß an die zweite Sammelschiene (SS2)
über Gatter (GAE1 ... GAEm) Ausgänge (AE1 ... AEm) zur
Übergabe der von den Feststationen (FS1 ... FSn) kommenden Signalkanäle an die Funkvermittlungsstelle (FVS) angeschlossen sind, wobei jedem Signalkanal in jedem Empfangsfrequenzteilband ein Ausgang zugeordnet ist, daß
alle Gatter mit Zeitlagenspeichern (ZLSP) versehen sind,
in denen die von einer Steuerung (17) der Funkvermittlungsstelle (FVS) ermittelten Gatterdurchschaltzeiten eingeschrieben werden, die gewährleisten, daß die Signalkanäle in der gewünschten Zeitlage in die Zeitmultiplex-
Rahmen eingeordnet, die Rahmen den für sie vorbestimmten
Sendern (S1 ... Sn) in den Feststationen (FS1 ... FSn) zugeführt und die von den Feststationen (FS1 ... FSn) kommenden Signalkanäle in gewünschter Weise auf die signalverarbeitenden Einrichtungen (24 ... 27) in der Funkvermittlungsstelle (FVS) aufgeteilt werden.

5. Digitales Mobilfunksystem nach Anspruch 4, dadurch gekennzeichnet, daß die mit den Feststationen (FS1 ... FSn)
verbundenen Eingänge (EE1 ... EEn) Normierungseinrichtungen (RN1 ... RNn) besitzen, welche die unterschiedlichen
Laufzeiten der von den Feststationen kommenden Signalrahmen ausgleichen.

6. Digitales Mobilfunksystem nach Anspruch 3 oder 4, dadurch
gekennzeichnet, daß die Gatter (GES1 ... GESm) an den
Eingängen (ES1 ... ESm) der ersten Sammelschiene (SS1)
dann einen Generator (STI) für statistische Information
an die erste Sammelschiene (SS1) durchschalten, wenn für
einen Kanal im Zeitmultiplex-Rahmen kein Nutzsignal vorliegt.

7. Digitales Mobilfunksystem nach Anspruch 4, dadurch gekennzeichnet, daß die Zeitlagenspeicher (ZLSP) der mit
den Eingängen (ES1 ... ESm) der ersten Sammelschiene (SS1)
verbundenen Gatter (GES1 ... GESm) während der in ihnen
adressierten Zeitlagen Abrufsignale bereitstellen, welche
den signalverarbeitenden Einrichtungen (24 ... 27) der
Funkvermittlungsstelle signalisieren, daß sie ihre Signalkanäle an die Eingänge (ES1 ... ESm) des Koppelfeldes abgeben können.

8. Digitales Mobilfunksystem nach Anspruch 7, dadurch gekennzeichnet, daß ein Abrufsignal aus einer Pulsfolge besteht, die soviele Impulse enthält, wie innerhalb einer
Zeitlage an Signalbits von einer signalverarbeitenden Einrichtung (24 ... 27) der Funkvermittlungsstelle abzugeben
sind.

0189822

Fig. 1

Unterband (890 - 915 MHz)  ·  Oberband (935 - 960 MHz)

TB 1a TB 2a   TB100a   TB1b TB2b   TB100b

96 kbit/s

Überrahmen für 1 Teilband

R10 | R1 | R2 | R3 | R4 | R5 | R6 | R7 | R8 | R9 | R10 | R1

Rahmen von 32 m sec, 3072 Bit

RSyn od. K1 OG. K2 | K3 | K4 | K5 | K6 | K7 | K8 | K9 | K10

Kanalburst 3,1875 msec, 306 Bit

Syn. Adr. Sig1 | Information | Sig 2 | Z

BK 85/4

Fig. 2

**a)**
OG~Kanalburst 3,1875 msec, 306 Bit

Syn | Information | Kenng. | Sync | Information | Kenng.

Standardtelegramm — Standardtelegramm

**b)**
Syn — Z

Kurztelegramm — Kurztelegramm — Kurztelegramm — Kurztelegramm

**c)**
Syn | Information | Z — Syn | Information | Z

Kurztelegramm — Kurztelegramm — Standardtelegramm

BK 85/4

0189822

**Fig. 3**

0189822

Fig. 4

BK 85/4

0189822

Fig. 5

BK 85 / 4